# EUROPEAN PATENT APPLICATION

(11) **EP 4 810 180 A1**
(43) Date of publication of application: **23.09.2026**
(21) Application number: 25203995.3
(22) Date of filing: 23.09.2025
(51) Int. Cl.: B22F 10/28, B22F 10/47, B22F 5/00, B33Y 10/00, B33Y 80/00

(54) **SUPPORT STRUCTURES USED IN METAL ADDITIVE MANUFACTURING AND METHOD OF MANUFACTURING METAL ADDITIVE MANUFACTURED PRODUCTS**

(30) Priority: 21.03.2025 KR 20250036619
(71) Applicant: Hanwha Aerospace Co., Ltd., Gyeongsangnam-do 51542 (KR)
(72) Inventor: Kim, Jin Young, 51542 Changwon-si, Gyeongsangnam-do (KR)
(74) Representative: Gulde & Partner

(57) **Abstract**

A non-contact support structure (100, 100A, 100B) supports a metal additive manufactured product (P) that includes a first shape structure (P1) having an overhang structure. The non-contact support (100, 100A, 100B) includes: an opposite surface (110, 110A, 110B) configured to face a surface (S) of the first shape structure (P1); a bottom surface (120, 120A, 120B) configured to contact a base (B) on which the metal additive manufactured product (P) is provided; and an intermediate surface (130, 130A, 130B) perpendicular to both the opposite surface (110, 110A, 110B) and the bottom surface (120, 120A, 120B) and including at least one opening (140, 140A, 140B).

## Description

### BACKGROUND

### 1. Field

The disclosure relates to a support structure used in metal additive manufacturing and a method of manufacturing metal additive manufactured products. The disclosure relates to a support structure used in metal additive manufacturing and a method of manufacturing metal additive manufactured products by employing a non-contact support structure to reduce heat loss and the like.

### 2. Description of the Related Art

Metal additive manufacturing refers to manufacturing a three-dimensional (3D) object by continuously stacking a predetermined material on a two-dimensional surface based on digital 3D model data. Selective powder melting such as selective laser melting (SLM) is an often-used type of metal additive manufacturing. Metal additive manufacturing by selective powder melting has recently been in high demand in various industries because of its excellent internal quality and shape implementation accuracy, ease of manufacturing complex shapes, and reduced process time due to simplified process procedures.

An overhang structure refers to a structure that protrudes outward in a direction away from the ground. An overhang angle is an angle formed by the overhang structure and the ground. When a metal additive manufactured product includes a structure having an overhang angle of less than 45 degrees in the overhang structure, there is a risk of shape collapse during metal additive manufacturing. Furthermore, even a metal additive manufactured product containing a structure with an overhang angle of 45 degrees or more in the overhang structure may be deformed depending on the area of stacked additive manufactured products, which may act as a cause of process failure.

The background technology described above is technical information that the inventor possessed or acquired during the process of deriving the disclosure, and cannot necessarily be considered as publicly known technology disclosed to the general public prior to the application.

### SUMMARY

Provided is a support structure for metal additive manufacturing and a method of manufacturing a metal additive manufactured product by employing a non-contact support structure to reduce heat loss.

However, the task is only an example, and the task that the inventive concept seeks is not limited thereto. Any tasks not mentioned will be clearly understood by those skilled in the art from this specification and the attached drawings.

Additional aspects will be set forth in part in the description which follows and, in part, will be apparent from the description, or may be learned by practice of the presented embodiments of the disclosure.

According to an embodiment of the disclosure, provided is a non-contact support structure for supporting a metal additive manufactured product including a first shape structure that has an overhang structure, the non-contact support structure may include: an opposite surface configured to face a surface of the first shape structure; a bottom surface configured to contact a base on which the metal additive manufactured product is provided; and an intermediate surface perpendicular to both the opposite surface and the bottom surface and including at least one opening.

A cross-section perpendicular to the base of the first shape structure may include an equilateral trapezoid that has a bottom side shorter than a top side.

The first shape structure may include a plurality of first surfaces in a same direction as a hypotenuse of the equilateral trapezoid; and may include at least one second surface perpendicular to the hypotenuse of the equilateral trapezoid.

The opposite surface may be configured to be spaced apart from and be parallel to a first surface among the plurality of first surfaces.

The opposite surface may be configured to be spaced apart from the first surface by a gap that may be 8 to 10 times a stacking height of one layer of the first shape structure.

A ratio of an average thickness of the non-contact support structure to a length of the opposite surface may be in a range of 1:7 to 1:10.

A longitudinal direction of the at least one opening may form an angle with the base that may be 45° or more.

The non-contact support structure may further include an inner pillar connecting the opposite surface to the bottom surface and configured to face the first shape structure; and may include an outer pillar connecting the opposite surface to the bottom surface and configured to face a direction that is opposite of the first shape structure.

The outer pillar includes may include a first outer pillar perpendicular to the bottom surface; may include a second outer pillar connected to a top end of the first outer pillar and inclined toward the inner pillar; and may include a third outer pillar connected from a top end of the second outer pillar to an outer top end of the opposite surface and inclined toward a direction that is opposite of the inner pillar.

According to an embodiment of the disclosure, provided is a support structure for supporting a metal additive manufactured product, the support structure may include: a non-contact support structure including: an opposite surface configured to face a surface of the first shape structure, a bottom surface configured to contact a base on which the metal additive manufactured product is provided, and an intermediate surface perpendicular to both the opposite surface and the bottom surface and including at least one opening; and a contact support structure configured to contact and support the metal additive manufactured product.

The metal additive manufactured product may include a first shape structure that has an overhang structure, where the contact support structure may be configured to contact the first shape structure.

A cross-section perpendicular to a base of the first shape structure may include an equilateral trapezoid that has a bottom side shorter than a top side.

The first shape structure may include a plurality of first surfaces in the same direction as a hypotenuse of the equilateral trapezoid; and may include at least one second surface perpendicular to the hypotenuse of the equilateral trapezoid.

The non-contact support structure may be configured to face a first surface among the plurality of first surfaces, where the contact support structure may be configured to contact a second surface among the at least one second surface.

The support structure may further include a plurality of the non-contact support structures and a plurality of the contact support structures, where the plurality of non-contact support structures and the plurality of contact support structures may be alternately spaced apart from each other in a circumferential direction.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 is a perspective view showing a metal additive manufactured product and a support structure supporting the same according to an embodiment;
FIG. 2 is a diagram for explaining an overhang structure and an overhang angle according to an embodiment;
FIG. 3 is a front view illustrating an example of a metal additive manufactured product that may be supported by a support structure according to an embodiment;
FIG. 4 is a bottom view illustrating a first shape structure of a metal additive manufactured product according to an embodiment;
FIG. 5 is a perspective view illustrating non-contact support structures according to an embodiment;
FIG. 6 is a top view illustrating a state in which non-contact support structures are arranged according to an embodiment;
FIG. 7A and FIG. 7B is a side view illustrating an example of a non-contact support structure according to an embodiment;
FIG. 8 is a front view schematically illustrating a positional relationship between a non-contact support structure and a metal additive manufactured product according to an embodiment;
FIG. 9 is an enlarged view of a portion A of FIG. 8, illustrating a gap between an opposite surface and a first surface according to an embodiment;
FIG. 10 is a side view illustrating another example of a non-contact support structure according to an embodiment;
FIG. 11 is a side view illustrating another example of a non-contact support structure according to an embodiment;
FIG. 12 is a perspective view illustrating a state in which contact support structures are arranged according to an embodiment;
FIG. 13 is a perspective view schematically illustrating a positional relationship between contact support structures and a metal additive manufactured product according to an embodiment;
FIG. 14 is a side view illustrating an example of a contact support structure according to an embodiment;
FIG. 15 is a side view of the contact support structure of FIG. 14 according to an embodiment;
FIG. 16 is a view illustrating a state in which a support structure is arranged according to an embodiment; and
FIG. 17 is a flowchart illustrating a method of manufacturing a metal additive manufactured product according to an embodiment.

### DETAILED DESCRIPTION

Reference will now be made in detail to embodiments, examples of which are illustrated in the accompanying drawings, in which like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Embodiments of the disclosure may be understood with reference to the description and drawings of the disclosure. The described embodiments have various modifications and may be implemented in different forms, and are not limited to the embodiments described herein. Furthermore, some or all of the features of each of the various embodiments of the present disclosure may be combined with each other. Each of the embodiments may be implemented independently of each other or in association with each other. The described embodiments are provided as examples to enable the present disclosure to be complete and perfect, and are intended to fully convey the idea of the present disclosure to those of ordinary skill in the art to which the present disclosure pertains. The present disclosure may be replaced within all modifications, equivalents, and the technical scope of the present disclosure as defined by the appended claims. Thus, processes, components, techniques, and the like not required by one of ordinary skill in the art for a complete understanding of embodiments of the present disclosure may not be described.

Unless otherwise stated throughout the attached drawings and specifications, the same reference numerals, letters or combinations thereof indicate the same components, and thus redundant descriptions are omitted. In addition, in order to clearly explain the disclosure, units not related to the description are omitted.

The relative sizes of elements, layers, and areas in the drawings may be exaggerated for clarity. The use of hatching and/or shading in the accompanying drawings may generally be provided to clarify the boundaries between adjacent elements. Thus, the presence or absence of hatching or shading does not represent preferred forms or requirements for a particular material, material properties, dimensions, ratios, commonalities between illustrated elements and/or other characteristics, properties, features, etc. of an unspecified element.

Various embodiments are described herein with reference to cross-sectional examples that are schematic examples of embodiments and/or intermediate structures. Thus, for example, the shape of the drawing may vary as a result of manufacturing techniques and/or tolerances. Furthermore, the specific structural or functional description disclosed in this disclosure is merely an example for explaining an embodiment of the present disclosure. Therefore, embodiments disclosed in the present disclosure should not be construed as being limited to the shape of the illustrated area, and include, for example, variations in the shape according to manufacturing.

The area shown in the drawing is essentially schematic and its shape is not intended to illustrate the actual shape of the device area and is not intended to be limited. In addition, as recognized by those skilled in the art, the described embodiments may be modified in various ways to the extent that they do not deviate from the scope of the present disclosure as defined by the appended claims.

A number of specific details are presented to provide a complete understanding of various embodiments in the specification. However, various embodiments may be implemented without these specific details or including one or more details. In other cases, well-known structures and devices are shown in block diagram form to avoid unnecessarily obscuring various embodiments.

As illustrated in the drawing, spatially relative terms such as "down", "up", "lower unit", "down", "upper unit", and the like may be used here to facilitate description of the relationship between one element or feature and another element or feature. The spatially relative terms are intended to include various directions of the device in use or operation in addition to the directions shown in the drawing. For example, if the device in the figures is turned over, elements described as "below," "beneath," "or "under" other elements or features would then be oriented "above" the other elements or features. Thus, as illustrative terms, "down" and "lower unit" may include both up and down directions. The device may be directed in a different direction (e.g., 90° rotation or another direction), and the spatially relative description used herein should be interpreted accordingly. Likewise, when it is stated that a first unit is positioned "above" a second unit, this means that the first unit is positioned above or below the second unit.

In addition, the expression "viewed from a plane" means the case where the object is viewed from above, and the expression "in an approximate cross-sectional view" means the case where the object is cut vertically or horizontally to take a rough cross-section. The term "as viewed from the side" means that the first object may be above, below, or on the side of the second object and vice versa. Additionally, the term "overlap" may include layer, stack, face or facing, extending over, covering, or partly covering or any other suitable term as would be appreciated and understood by those of ordinary skill in the art. The expression "nonoverlapping" may include meanings such as "apart from" or "separated from" and any other suitable equivalents recognized and understood by one of ordinary skill in the art. The terms "face" and "surface" may mean that a first object may directly or indirectly face a second object. When there is a third object between a first object and a second object, it may be understood that the first object and the second object face each other but indirectly face each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, "formed in", "connected to", or "combined with" may collectively refer to an integral or non-unitary combination or connection with a direct or indirect combination or connection of an element, layer, region, or component so that one or more elements, layers, regions, or components may exist. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected to" or "directly combined with" means that one component is connected to or combined with another directly without an intermediate component, or the former is on the latter. In addition, in the present disclosure, when a unit of a layer, film, region, guide plate, etc. is formed on another unit, the formation direction is not limited to the upper direction, and includes the unit being formed on the side or bottom. Conversely, when a unit of a layer, film, region, guide plate, etc. is formed "underneath" another unit, this includes not only the case where the unit is "directly under" the other unit, but also the case where there is still another unit between the unit and the other unit. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of the present disclosure, expressions such as "at least one" or "anyone" do not limit the order of individual elements. For example, "at least one of X, Y or Z", "at least one selected from a group of X, Y and Z" may include X alone, Y alone, Z alone, and any combination of two or more of X, Y and Z. Similarly, expressions such as "at least one of A and B" and "at least one of A or B" may include A, B, or A and B. In the present disclosure, the term "and/or" generally includes all combinations of one or more related list items. For example, expressions such as "A and/or B" may include A, B, or both A and B.

Although the terms "first," "second," "third," etc. may be used herein to describe various elements, components, regions, layers, and/or cross-sections, such elements, components, regions, layers, and/or cross-sections are not limited by these terms. These terms are used to distinguish one element, component, region, layer or cross section from another element, component, region, layer or cross section. Therefore, the first element, component, region, layer or cross section described below may be referred to as the second element, component, region, layer or cross section without departing from the scope of the present disclosure as defined by the appended claims. The description of an element as a "first" element may not require or imply the presence of a second element or other elements. Terms such as "first", "second", and the like may be used in the present disclosure to distinguish between different categories or sets of elements. For clarity, the terms "first", "second", etc. may represent "first category (or first set)", "second category (or second set)", etc., respectively.

The terms used herein are used only to describe particular embodiments, and are not intended to limit the present disclosure. As used in the present disclosure, a singular expression is intended to include a plural expression as well, and a plural expression is also intended to include a singular expression unless the context clearly indicates otherwise. It will be further understood that the terms "comprises," "comprising," "have," "having," "includes," "including," and the like, when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the order described. For example, two processes described in succession may be performed substantially simultaneously, or may be performed in the opposite order to the order described.

Terms "substantially", "about", "approximately" and similar terms are used as terms of approximation rather than degree, and mean satisfying the inherent range of variation in a measured or calculated value (e.g., the range of variation due to limitations of the measurement system). For example, "about" could mean within one or more standard deviations, or within ±30 %, ±20 %, ±10 %, or ±5 % of a specified value.

Unless otherwise defined, all terms used herein, including technical or scientific terms, have the same meaning as commonly understood by one of ordinary skill in the art to which the inventive concept pertains. Terms such as commonly used dictionary-defined terms shall be construed as having meaning consistent with their meaning in the context of the relevant technology and/or the present disclosure, and shall not be idealized or interpreted in an overly formal sense unless explicitly defined herein.

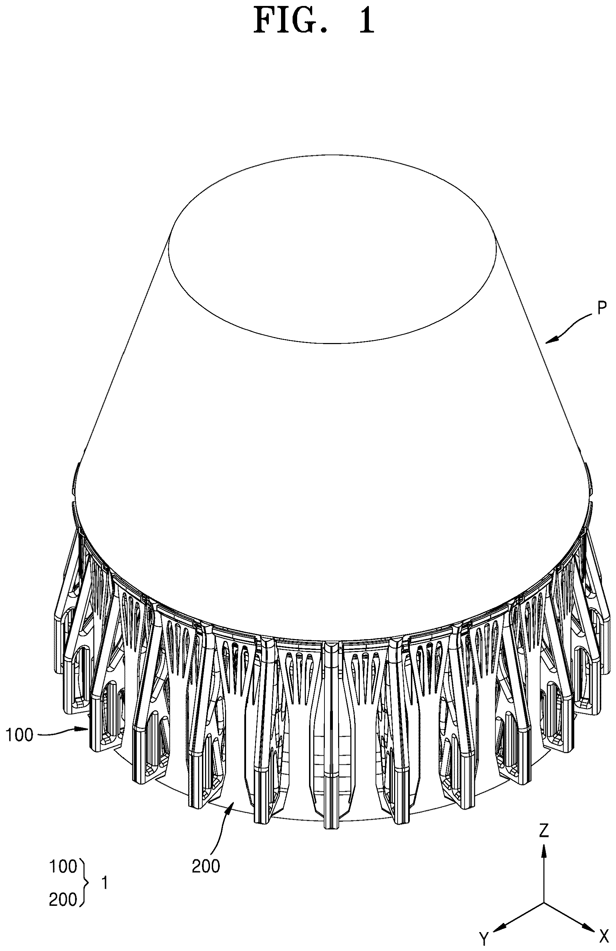

Hereinafter, a support structure used for metal additive manufacturing and a method for manufacturing a metal additive manufactured product according to embodiments of the disclosure will be described with reference to FIGS. 1 to 17.

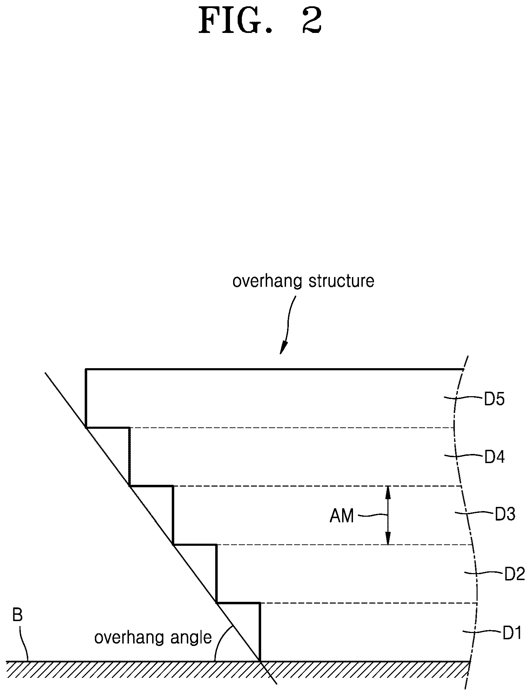

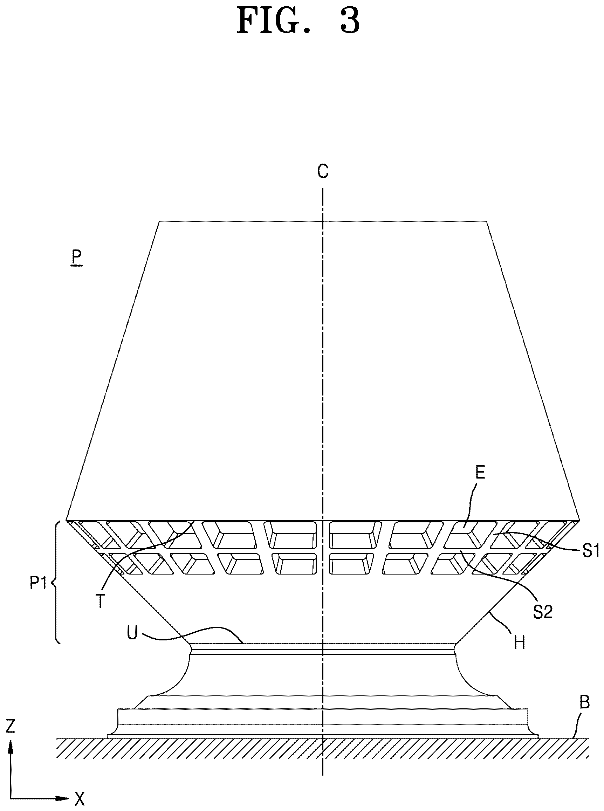

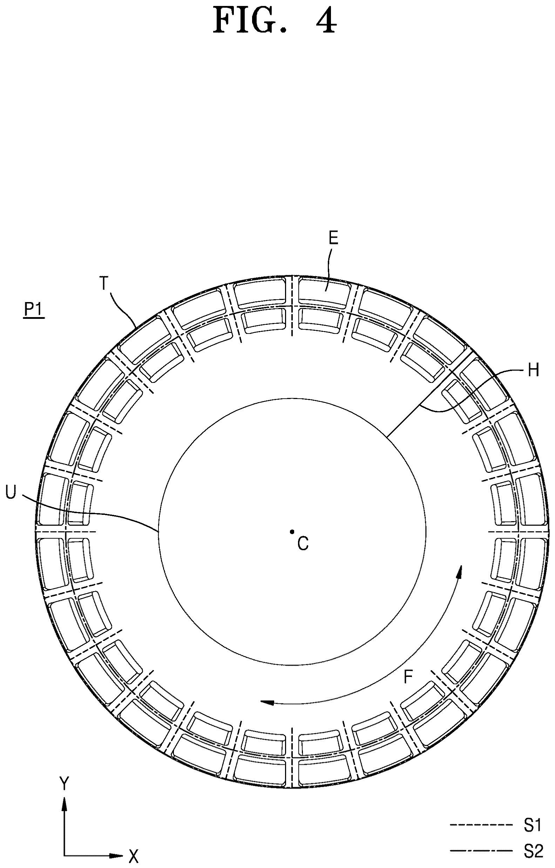

FIG. 1 is a perspective view showing a metal additive manufactured product P and a support structure 1 supporting the same according to an embodiment. FIG. 2 is a diagram for explaining an overhang structure and an overhang angle according to an embodiment. FIG. 3 is a front view illustrating an example of the metal additive manufactured product P that may be supported by the support structure 1 according to an embodiment. FIG. 4 is a bottom view illustrating a first shape structure P1 of the metal additive manufactured product P according to an embodiment.

The metal additive manufactured product P is manufactured in a shape by metal additive manufacturing. Metal additive manufacturing refers to manufacturing a three-dimensional (3D) object by continuously stacking a predetermined material on a two-dimensional surface based on digital 3D model data. The metal additive manufacturing may include selective laser melting (SLM). SLM is a method of applying a fine particle-shaped metal powder to a predetermined height, irradiating thermal energy such as a laser or electron beam to a specific area of the applied metal powder to melt the metal powder in that area, and repeating the applying and the irradiating to manufacture the same shape as the 3D model. Referring to FIG. 1, the metal additive manufactured product P may be manufactured together with a support structure 1 by using metal additive manufacturing. The support structure 1 will be described later, and the metal additive manufactured product P to which the support structure 1 may be applied will be described below.

Before describing the metal additive manufactured product P, an overhang structure will be described first. An overhang structure refers to a structure that protrudes outward in a direction away from the base B. An example of an overhang structure will be described by taking FIG. 2 as an example as follows.

FIG. 2 illustrates an arbitrary shape manufactured by stacking first to fifth layers D1 to D5. The second layer D2, which is farther from the base B than the first layer D1, protrudes further outward than the first layer D1. In FIG. 2, the outer side points to the left side. The third layer D3, which is farther from the base B than the second layer D2, protrudes further outward than the second layer D2. The fourth layer D4, which is farther from the base B than the third layer D3, protrudes further outward than the third layer D3. The fifth layer D5, which is farther from the base B than the fourth layer D4, protrudes further outward than the fourth layer D4. In this case, the structure including the first to fifth layers D1 to D5 is an overhang structure. However, the form illustrated in FIG. 2 is an example of an overhang structure, and the form of the overhang structure is not limited thereto.

Meanwhile, an overhang angle refers to an angle formed by the overhang structure and the base B. That is, the overhang angle may be less than 90 degrees.

The metal additive manufactured product P may include a first shape structure P1. The base B is a top surface of a base plate serving as a worktable in which a metal additive manufactured product P is manufactured, and refers to a surface where the metal additive manufactured product P and the base plate contact each other. The same as above will be applied through the disclosure. Referring to FIG. 3, the first shape structure P1 may have an overhang structure.

In an embodiment, referring to FIGS. 3 and 4, the shape of the cross section perpendicular to the base B of the first shape structure P1 may include an equilateral trapezoid in which the bottom side U is shorter than the upper side T. The equilateral trapezoid may include the upper side T, the bottom side U, and a hypotenuse H. The equilateral trapezoid may have the bottom side U shorter than the upper side T. In an embodiment, the first shape structure P1 may include a shape symmetrical in all directions with respect to the central axis C.

The first shape structure P1 may include a first surface S1 and a second surface S2. The first surface S1 may be in the same direction as the hypotenuse H of the equilateral trapezoid. There may be a plurality of first surfaces S1. Referring to FIG. 4, the plurality of first surfaces S1 may be spaced apart from each other by a predetermined distance while surrounding the central axis C of the first shape structure P1. The second surface S2 may be perpendicular to the hypotenuse H of the equilateral trapezoid. There may be at least one second surface S2. That is, referring to FIG. 4, there may be a plurality of second surfaces S2.

The first shape structure P1 may further include a shape of the hole E. The hole E may be formed by being surrounded by the first surface S1 and the second surface S2. In an embodiment, the metal additive manufactured product P may include a fuel nozzle of a combustor used in an industrial gas turbine, and the hole E may include an outlet through which fuel is injected.

In an embodiment, the first shape structure P1 may include a truncated cone shape having the bottom surface smaller than the upper surface. The first shape structure P1 may include a first surface S1 and a second surface S2. The first surface S1 may be in the same direction as a slant of a truncated cone-shaped busbar. There may be a plurality of first surfaces S1. Referring to FIG. 4, the plurality of first surfaces S1 may be spaced apart from each other by a predetermined distance while surrounding the central axis C of the first shape structure P1. The second surface S2 may be perpendicular to a slant of a truncated cone-shaped busbar. There may be at least one second surface S2. That is, there may be a plurality of second surfaces S2.

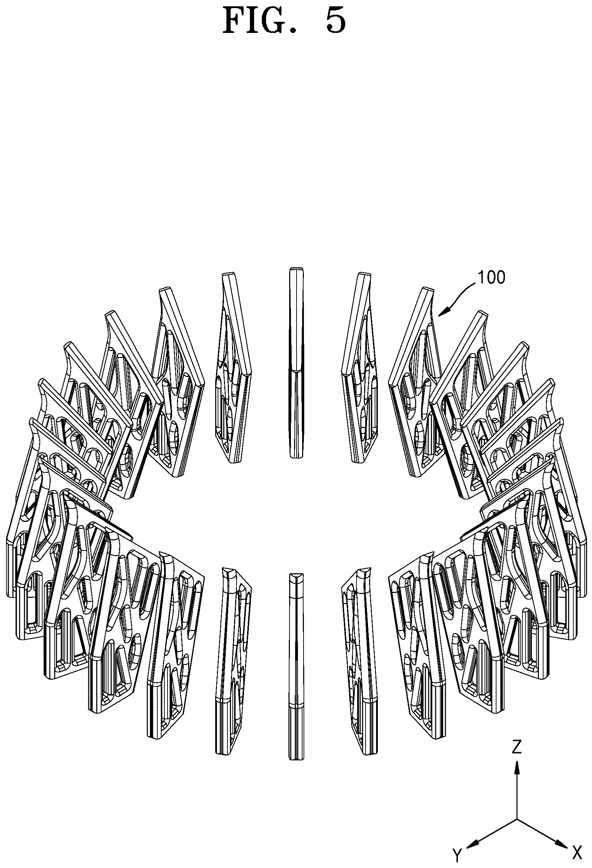

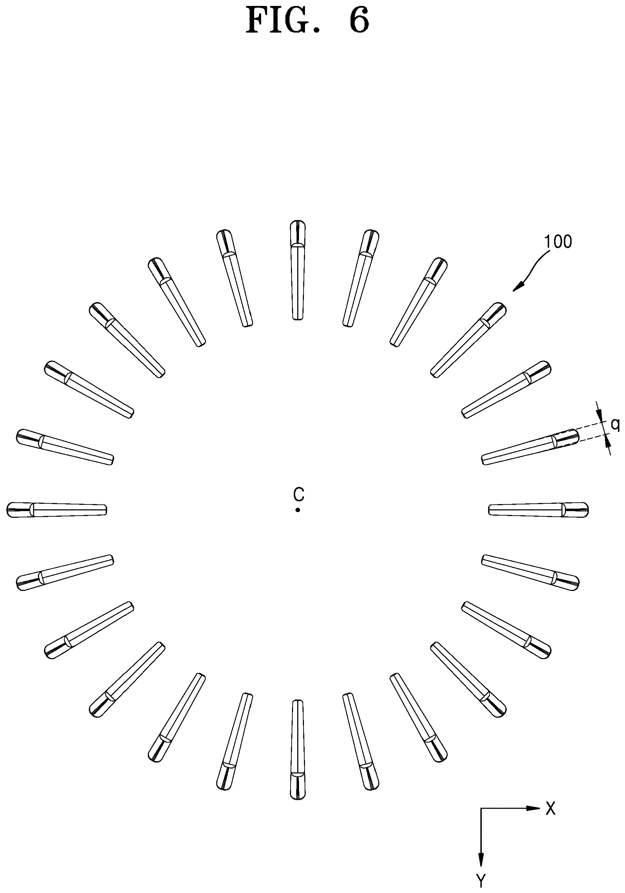

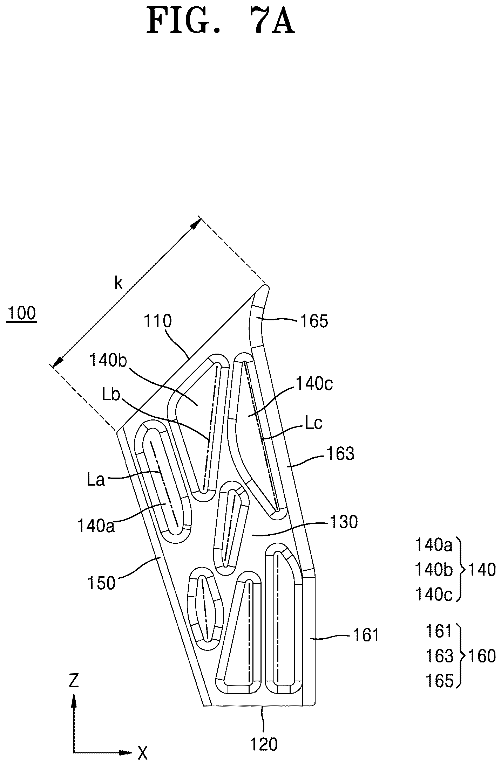

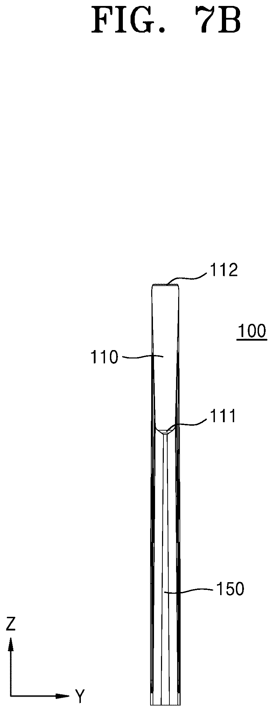

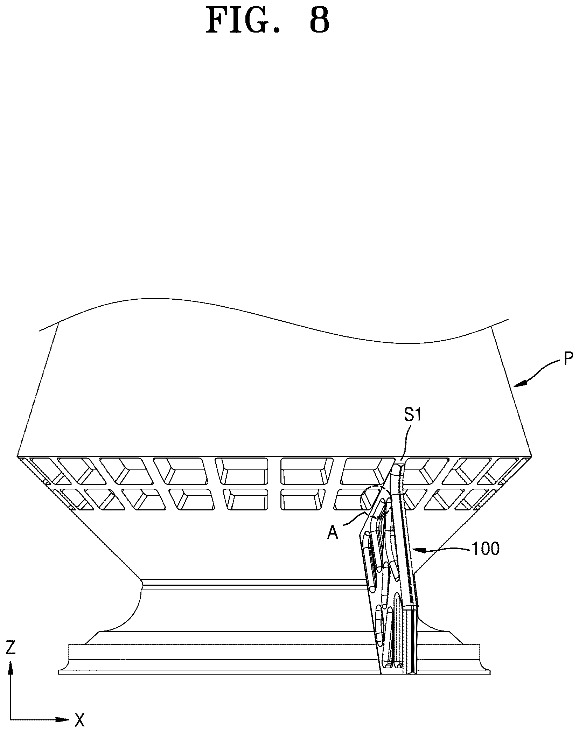

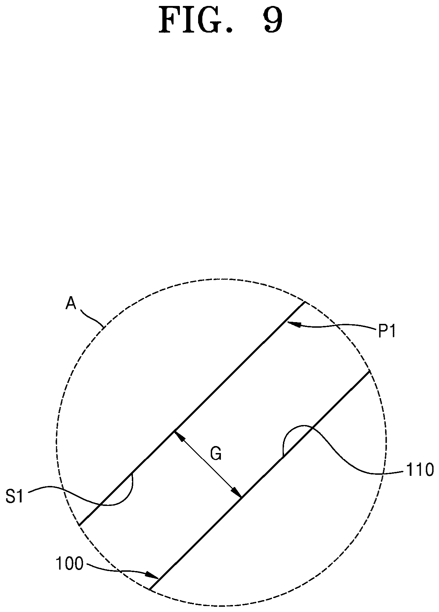

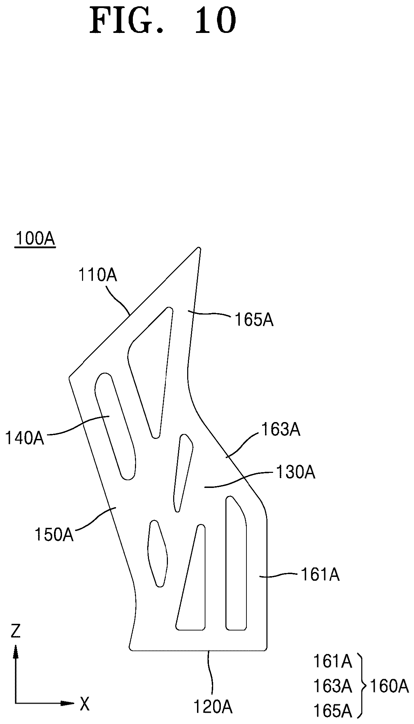

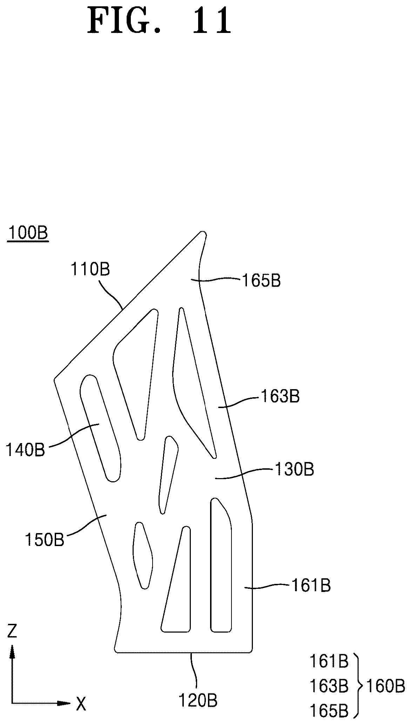

FIG. 5 is a perspective view illustrating non-contact support structures 100 according to an embodiment. FIG. 6 is a top view illustrating a state in which non-contact support structures 100 are arranged according to an embodiment. FIG. 7A and FIG. 7B is a side view illustrating an example of a non-contact support structure 100 according to an embodiment. FIG. 8 is a front view schematically illustrating a positional relationship between a non-contact support structure 100 and a metal additive manufactured product P according to an embodiment. FIG. 9 is an enlarged view of a portion A of FIG. 8, illustrating a gap G between an opposite surface 110 and a first surface S1 according to an embodiment. FIG. 10 is a side view illustrating another example of a non-contact support structure 100 according to an embodiment. FIG. 11 is a side view illustrating another example of a non-contact support structure 100 according to an embodiment.

The support structure 1 may support the metal additive manufactured product P as shown in FIG. 1. Design data of the support structure 1 may be input to a metal 3D printer together with the metal additive manufactured product P in the form of digital 3D model data. The support structure 1 may be manufactured together with the metal additive manufactured product P by metal additive manufacturing. Accordingly, warping and distortion of the stacked surface may be prevented, the collapse of the first shape structure P1 may be prevented, heat loss of the metal additive manufactured product P may be improved, and mechanical stress may be dispersed. The support structure 1 may include a non-contact support structure 100 and a contact support structure 200.

The non-contact support structure 100 may support the metal additive manufactured product P. The non-contact support structure 100 may face the first surface S1. There may be a plurality of non-contact support structures 100. Referring to FIGS. 5 and 6, the non-contact support structure 100 may be disposed at a position corresponding to the first surface S1 of the first shape structure P1. That is, a plurality of non-contact support structures 100 may surround the central axis C of the first shape structure P1 and may be spaced apart from each other at a predetermined interval.

Referring to FIG. 7A and FIG. 7B, the non-contact support structure 100 may include an opposite surface 110, a bottom surface 120, an intermediate surface 130, an opening 140, an inner pillar 150, and an outer pillar 160.

Referring to FIGS. 8 and 9, the opposite surface 110 may face one surface of the first shape structure P1. The opposite surface 110 may be spaced apart from the first surface S1. That is, the opposite surface 110 may be spaced apart from the first surface S1 by a predetermined distance G. Metal powder may be present at the gap G during metal additive manufacturing.

In this way, the non-contact support structure 100 serves as a heat sink by being in non-contact with the metal additive manufactured product P and may improve the heat transfer efficiency from the metal additive manufactured product P to the non-contact support structure 100. Accordingly, it is possible to quickly cool the metal additive manufactured product P. In addition, the non-contact support structure 100 may improve the mechanical characteristics of the first shape structure P1 and reduce the amount of deformation of the first shape structure P1.

The distance G between the opposite surface 110 and the first surface S1 may be determined as a value having the least amount of deformation of the first shape structure P1. In an embodiment, the distance G between the opposite surface 110 and the first surface S1 may be 8 to 10 times the stack height AM. The stacking height AM refers to the height that is stacked at one time (see FIG. 2). In other words, the stacking height AM refers to a height of one layer of the shape structure. For example, when the stacking height AM is 0.04 mm, the distance G between the opposite surface 110 and the first surface S1 may be 0.32 mm to 0.4 mm.

In an embodiment, referring to FIG. 7B the opposite surface 110 may include an equilateral trapezoid having an inner side 111 shorter than an outer side 112. The inner side 111 refers to a side that is toward the first shape structure P1. Accordingly, when a plurality of non-contact support structures 100 surround the central axis C of the first shape structure P1 and are spaced apart from each other, the metal additive manufactured product P may be stably supported.

The average thickness q of the non-contact support structure 100 and the length of the opposite surface 110 may vary according to the total volume of the non-contact support structure 100, the size of the metal additive manufactured product P, the shape of the first shape structure P1, and the area of the first surface S1, and may be determined as values of the least amount of deformation of the first shape structure P1. In an embodiment, a ratio of the average thickness q of the non-contact support structure 100 to the length k of the opposite surface 110 may be 1:7 to 1:10.

The bottom surface 120 may be in contact with the base B. The bottom surface 120 may serve to transfer heat received from the first shape structure P1 to the base plate.

The intermediate surface 130 may serve to support the opposite surface 110 and at the same time transfer heat absorbed from the opposite surface 110 to the bottom surface 120. The intermediate surface 130 may be perpendicular to both the opposite surface 110 and the bottom surface 120.

The intermediate surface 130 may include at least one opening 140. Referring to FIG. 7A, there may be a plurality of openings 140. The shape of the opening 140 is not particularly limited. The opening 140 may have a shape including three to five sides or curves. The opening 140 reduces the volume of the non-contact support structure 100 to reduce the amount of metal powder used during metal additive manufacturing, thereby reducing the manufacturing cost of the metal additive manufactured product P.

An angle formed by the longitudinal direction L of the opening 140 with respect to the base B may be 45° or more. Referring to FIG. 7A, angles formed by the longitudinal direction La of the first opening 140a, the longitudinal direction Lb of the second opening 140b, and the longitudinal direction Lc of the third opening 140c with respect to the X-axis may all be 45° or more. Accordingly, heat transfer may be performed more smoothly by allowing the torso of the non-contact support structure 100 surrounding the opening 140 to face the bottom surface 120 from the opposite surface 110.

The inner pillar 150 may connect the opposite surface 110 with the bottom surface 120. The inner pillar 150 may connect an inner lower end of the opposite surface 110 with an inner end of the bottom surface 120. The inner pillar 150 may face the first shape structure P1. In an embodiment, referring to FIG. 7A, the inner pillar 150 may be formed in a straight line without bending. Accordingly, durability of the non-contact support structure 100 may be improved.

The outer pillar 160 may connect the opposite surface 110 with the bottom surface 120. The outer pillar 160 may connect an outer upper end of the opposite surface 110 with the outer other end of the bottom surface 120. The outer pillar 160 may face a direction opposite to the first shape structure P1. In an embodiment, referring to FIG. 7A, the outer pillar 160 may include a first outer pillar 161, a second outer pillar 163, and a third outer pillar 165.

The first outer pillar 161 may be perpendicular to the bottom surface 120. The second outer pillar 163 may be connected to an upper end of the first outer pillar 161. The second outer pillar 163 may be inclined toward the first shape structure P1. In other words, the second outer pillar 163 may be inclined toward the inner pillar 150. The third outer pillar 165 may be connected from an upper end of the second outer pillar 163 to an outer upper end of the opposite surface 110. The third outer pillar 165 may be inclined in a direction opposite to the first shape structure P1. In other words, the third outer pillar may be inclined in a direction that is opposite to the inner pillar 150. As the outer pillar 160 includes the shape described above, the volume of the non-contact support structure 100 may be reduced, load and stress may be effectively dispersed, and support strength for the first shape structure P1 may be improved.

In an embodiment, referring to FIG. 7A, the inner pillar 150 and the outer pillar 160 may be filleted. In an embodiment, the boundary portion of the opening 140 may be filleted. Accordingly, the volume of the non-contact support structure 100 may be reduced to reduce the manufacturing cost of the metal additive manufactured product P.

In another embodiment, a non-contact support structure 100A having a shape different from that of the non-contact support structure 100 of FIG. 7A is shown in FIG. 10. The non-contact support structure 100A may include an opposite surface 110A, a bottom surface 120A, an intermediate surface 130A, an opening 140A, an inner pillar 150A, and an outer pillar 160A. Description which is the same or similar to that of the non-contact support structure 100 described above will be omitted, differences will be chiefly described.

The number and shape of the openings 140A may be differently set in consideration of the total volume of the non-contact support structure 100A. The total volume of the non-contact support structure 100A may affect the amount of deformation of the first shape structure P1. That is, the number and shape of the openings 140A may be determined to minimize the amount of deformation of the first shape structure P1.

The inner pillar 150A may include one bending. The bending may be closer to the bottom surface 120A than to the opposite surface 110A. The outer pillar 160A may include a first outer pillar 161A, a second outer pillar 163A, and a third outer pillar 165A. The first outer pillar 161A, the second outer pillar 163A, and the third outer pillar 165A may have the same length.

In another embodiment, a non-contact support structure 100B having a different shape from the non-contact support structure 100 of FIG. 7A is shown in FIG. 11. The non-contact support structure 100B may include an opposite surface 110B, a bottom surface 120B, an intermediate surface 130B, an opening 140B, an inner pillar 150B, and an outer pillar 160B. Description which is the same or similar to that of the non-contact support structure 100 described above will be omitted, differences will be described.

The length of the bottom surface 120B may be extended from the length of the bottom surface 120. Accordingly, the non-contact support structure 100B may support the first shape structure P1 more stably. The inner pillar 150B may include one bending. The bending may be closer to the bottom surface 120B than to the opposite surface 110B.

In addition to the embodiments shown in FIGS. 10 and 11, the shapes of the opposite surface 110, the bottom surface 120, the intermediate surface 130, the opening 140, the inner pillar 150, and the outer pillar 160 may vary according to the variation of the shape of the first shape structure P1 such as the inclination of a hypotenuse H.

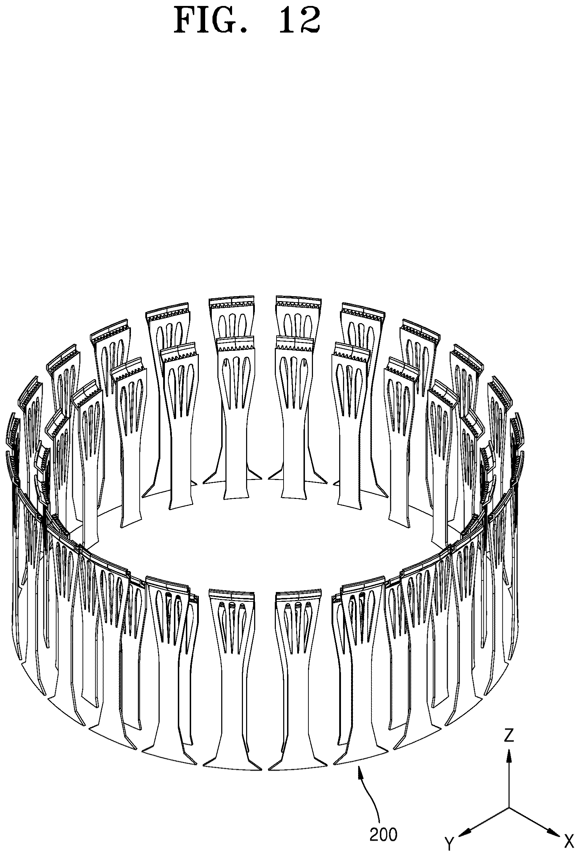

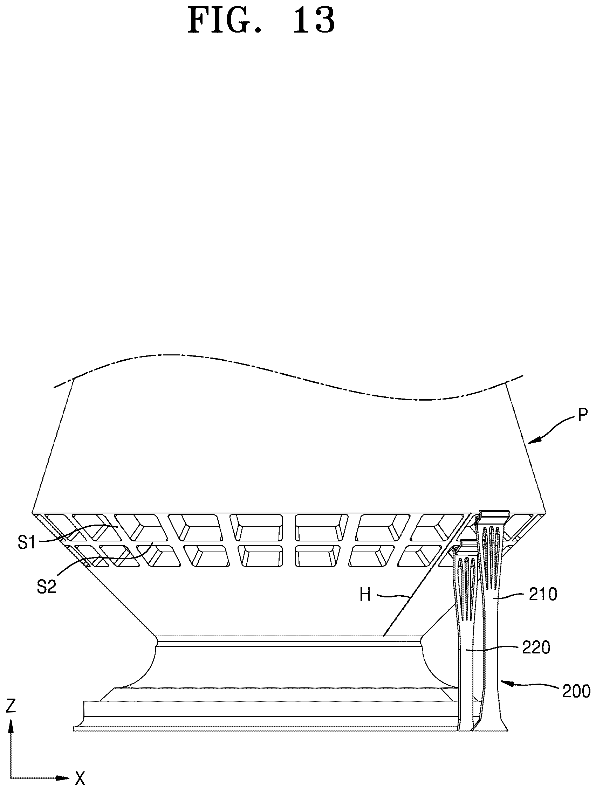

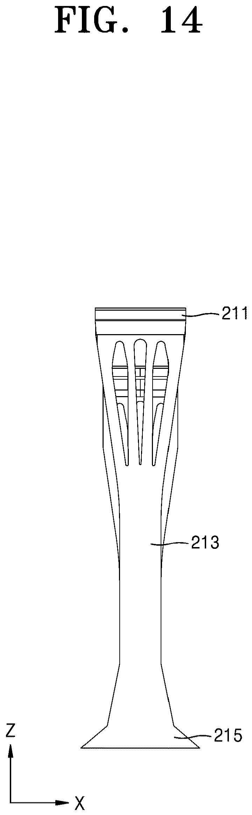

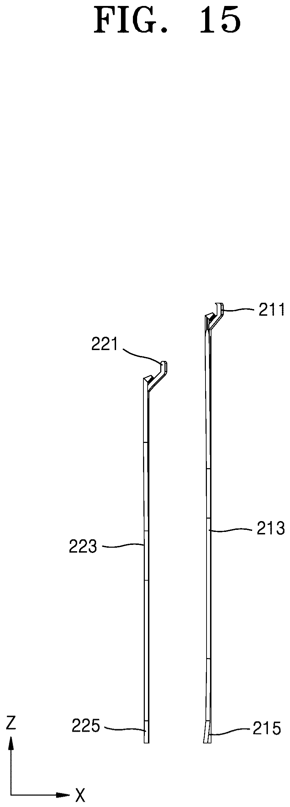

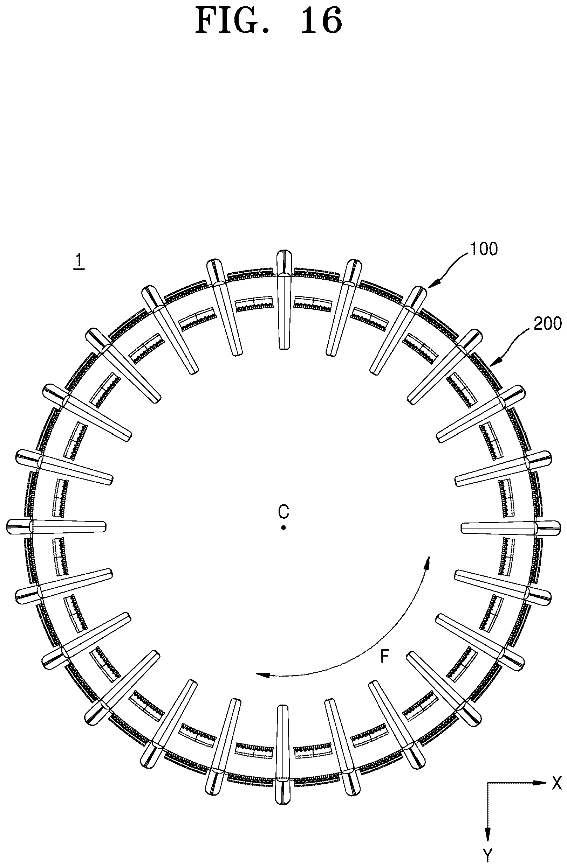

FIG. 12 is a perspective view illustrating a state in which contact support structures 200 are arranged according to an embodiment. FIG. 13 is a perspective view schematically illustrating a positional relationship between contact support structures 200 and a metal additive manufactured product P according to an embodiment. FIG. 14 is a side view illustrating an example of a contact support structure 200 according to an embodiment. FIG. 15 is a side view of the contact support structure 200 of FIG. 14. FIG. 16 is a view illustrating a state in which a support structure 1 is arranged according to an embodiment.

The contact support structure 200 may be in contact with the metal additive manufactured product P to support the metal additive manufactured product P. The contact support structure 200 may be removed from the first shape structure P1 through a post-process after the metal additive manufacturing.

The contact support structure 200 may be in contact with the first shape structure P1. Specifically, the contact support structure 200 may be in contact with the second surface S2. There may be a plurality of contact support structures 200. Referring to FIGS. 12 and 13, the contact support structure 200 may be disposed at a position corresponding to the second surface S2 of the first shape structure P1. That is, a plurality of contact support structures 200 may surround the central axis C of the first shape structure P1 and may be spaced apart from each other at a predetermined interval.

Referring to FIG. 13, the contact support structure 200 may include a first contact support structure 210 and a second contact support structure 220. The first contact support structure 210 may be disposed at an outer side of the contact support structure 200. The second contact support structure 220 may be disposed at an inner side of the contact support structure 200. That is, the first contact support structure 210 may be in contact with an outer upper end of a hypotenuse H of the first shape structure P1. The second contact support structure 220 may be in contact with the hypotenuse H of the first shape structure P1, and be on the inner side of the first contact support structure 210. Due to the shape features of the first shape structure P1 described above, the first contact support structure 210 may be longer than the second contact support structure 220.

Referring to FIGS. 14 and 15, the first contact support structure 210 may include a contact portion 211, a pillar 213, and a support portion 215. The contact portion 211 may be in contact with the second surface S2. The pillar 213 may connect the contact portion 211 with the support portion 215 and may support the contact portion 211. As shown in FIG. 14, the pillar 213 may include at least one opening. Accordingly, by reducing the volume of the contact support structure 200 and thus reducing the amount of metal powder used during metal additive manufacturing, the manufacturing cost of the metal additive manufactured product P may be reduced. The support portion 215 may be in contact with the base B. The length of a portion of the support portion 215 in contact with the base B may be longer than the width of the pillar 213. Accordingly, the contact portion 211 and the pillar 213 may be stably supported.

The second contact support structure 220 may include a contact portion 221, a pillar 223, and a support portion 225. The contact portion 221, the pillar 223, and the support portion 225 are the same as or similar to the contact portion 211, the pillar 213, and the support portion 215 of the first contact support structure 210, respectively, and thus detailed descriptions thereof will be omitted.

Referring to FIG. 16, the non-contact support structure 100 and the contact support structure 200 may be alternately spaced apart in the circumferential direction F of the first shape structure P1. Referring to FIG. 4, the circumferential direction F of the first shape structure P1 refers to a direction that is at the same distance from the central axis C of the first shape structure P1 and follows the trace of a point having the same height (Z-axis direction).

As the non-contact support structure 100 and the contact support structure 200 are alternately spaced apart, the effects of the support structure 1, such as preventing shape collapse, improving heat loss, and mechanical stress dispersion, are evenly applied in all directions of the first shape structure P1, enabling more stable metal additive manufacturing.

Since the support structure 1 includes both the non-contact support structure 100 and the contact support structure 200, the amount of deformation of the first shape structure P1 may be reduced compared to when only one of the non-contact support structure 100 or the contact support structure 200 is used. Since the support structure 1 has less contact with the metal additive manufactured product P than when only the contact support structure 200 is used, the overall process time may be shortened by reducing the time it takes to remove the support structure 1 after the metal additive manufacturing, and minimizing post-processing of the surface. Since the non-contact support structure 100 serves as a heat sink, heat transfer efficiency may be improved compared to the case where only the contact support structure 200 is used, and thus the support structure 1 may reduce the time required to cool the metal additive manufactured product P.

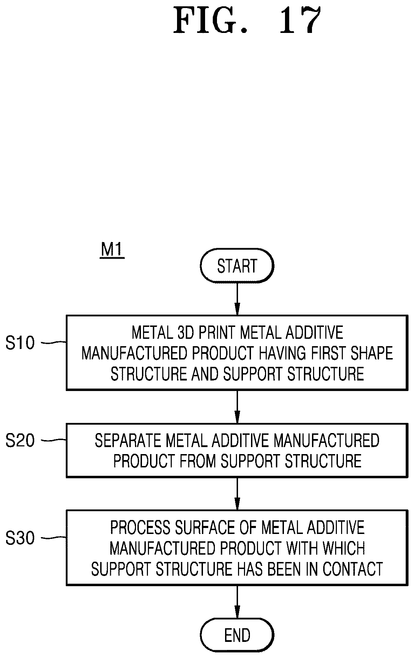

FIG. 17 is a flowchart illustrating a method M1 of manufacturing a metal additive manufactured product according to an embodiment.

The method M1 of manufacturing a metal additive product refers to a method of manufacturing a metal additive manufactured product P by employing the support structure 1.

The method M1 of manufacturing a metal additive manufactured product may include: performing metal 3D printing based on design data of the metal additive manufactured product P having a first shape structure P1 with an overhang structure and a support structure 1 supporting a first shape structure P1 (S10); separating the printed metal additive manufactured product P from the support structure 1 (S20); and processing the surface of the metal additive manufactured product P to which the support structure 1 has been in contact (S30). In this case, the support structure 1 may include a non-contact support structure 100 that is not in contact with the metal additive manufactured product P and a contact support structure 200 that is in contact with the metal additive manufactured product P to support the metal additive manufactured product P.

In the metal 3D printing operation S10, first, design data of the metal additive manufactured product P and the support structure 1 may be input to a metal 3D printer. The metal additive manufactured product P may include the first shape structure P1. A cross-section perpendicular to the base B of the first shape structure P1 may include an equilateral trapezoid has a bottom side U shorter than an upper side T. The equilateral trapezoid may include the upper side T, the bottom side U, and a hypotenuse H. The equilateral trapezoid may have the bottom side U shorter than the upper side T. In an embodiment, the first shape structure P1 may include a shape that is symmetrical with respect to the central axis C.

The first shape structure P1 may include a first surface S1 and a second surface S2. The first surface S1 may be in the same direction as a hypotenuse H of the equilateral trapezoid. There may be a plurality of first surfaces S1. Referring to FIG. 4, the plurality of first surfaces S1 may be spaced apart from each other by a predetermined distance while surrounding the central axis C of the first shape structure P1. The second surface S2 may be perpendicular to a hypotenuse H of the equilateral trapezoid. There may be at least one second surface S2. That is, referring to FIG. 4, there may be a plurality of second surfaces S2.

The first shape structure P1 may further include a shape of the hole E. The hole E may be formed by being surrounded by the first surface S1 and the second surface S2. In an embodiment, the metal additive manufactured product P may include a fuel nozzle of a combustor used in an industrial gas turbine, and the hole E may include an outlet through which fuel is injected.

The support structure 1 may support the metal additive manufactured product P including the first shape structure P1. The support structure 1 may include a non-contact support structure 100 and a contact support structure 200. The non-contact support structure 100 may face the first surface S1. Referring to FIGS. 5 and 6, the non-contact support structure 100 may be designed to be disposed at a position corresponding to the first surface S1 of the first shape structure P1. That is, a plurality of non-contact support structures 100 may be designed to surround the central axis C of the first shape structure P1 and may be designed to be spaced apart from each other at a predetermined interval.

The contact support structure 200 may be in contact with the second surface S2. Referring to FIGS. 12 and 13, the contact support structure 200 may be designed to be disposed at a position corresponding to the second surface S2 of the first shape structure P1. That is, a plurality of contact support structures 200 may be designed to surround the central axis C of the first shape structure P1 and may be designed to be spaced apart from each other at a predetermined interval.

In addition, descriptions of the metal additive manufactured product P and the support structure 1 input in the form of design data are the same as those described in FIGS. 1 to 16.

In the metal 3D printing operation S10, the metal 3D printer may perform printing based on the input design data. Metal 3D printing may include a selective laser melting (SLM) method. In other words, the metal 3D printer may print a metal additive manufactured product P and a support structure 1 consistent with the design data by repeatedly melting a specific area by irradiating a metal powder applied at a predetermined height with a laser or electron beam.

When the metal 3D printing operation S10 is completed, the metal additive manufactured product P and the non-contact support structure 100 may not be in direct contact with each other and may be spaced apart from each other with the metal powder therebetween. Therefore, in the support structure separation operation S20, when the metal additive manufactured product P is lifted in the height direction (Z axis), the metal additive manufactured product P may be easily separated from the non-contact support structure 100. In addition, since the metal additive manufactured product P and the contact support structure 200 are in contact with each other, a separate separation operation may be required. The separation operation of the metal additive manufactured product P from the contact support structure 200 may include a wire cutting discharge processing (W-EDM) method.

In the surface processing operation S30 of the metal additive manufactured product, marks remaining on the surface of the metal additive manufactured product P with which the contact support structure 200 comes into contact, if any, may be removed.

The method M1 of manufacturing a metal additive manufactured product may reduce the amount of deformation of the first shape structure P1 by using the non-contact support structure 100 together with the contact support structure 200, compared to a case where only one of the non-contact support structure 100 or the contact support structure 200 is used. In the method M1 of manufacturing a metal additive manufactured product, since the non-contact support structure 100 is used, a part where the support structure 1 is in contact with the metal additive manufactured product P may be reduced compared to a case where only the contact support structure 200 is used. Accordingly, the time required for the support structure separation operation S20 and the surface processing operation S30 of the metal additive manufactured product may be reduced, thereby shortening the overall process time. Since the non-contact support structure 100 serves as a heat sink, heat transfer efficiency may be improved compared to the case where only the contact support structure 200 is used, and thus the support structure 1 may reduce the time required to cool the metal additive manufactured product P.

Although the disclosure has been described with reference to the embodiments illustrated in the drawings as described above, this is only an example. It should be understood by those of ordinary skill in the art that various modifications and other equivalent embodiments are possible from the embodiments described above.

Specific technical content described above is merely for purposes of describing an embodiment, and does not limit the technical scope of the embodiment. In order to concisely and clearly describe the description of the inventive concept, descriptions of conventional general techniques and configurations may be omitted. In addition, the connection or connection members of lines between the components shown in the drawings illustratively represent functional connection and/or physical or circuit connections, and may be replaceable or represented as various additional functional connections, physical connections, or circuit connections in an actual device.

The terms "the" and the like used in the description and the claims of the disclosure may refer to "the singular" and "the plural" unless specifically limited thereto. In addition, when a range is described in the embodiment, the an embodiment may include any individual values belonging to the range (if there is no contrary description), as described in the description of the disclosure, each individual value constituting the range above. In addition, if there is no obvious order or contrary description of the steps or operations constituting the method according to the embodiment, the above steps or operations may be performed in an appropriate order. The embodiments are not necessarily limited to the written order of the steps or operations. The use of all examples or terms (e.g., etc.) in the embodiment is simply for describing the embodiment in detail, and thus, unless the scope of the embodiment is limited by the claims, the scope of the embodiment is not limited by the examples or terms. In addition, one of ordinary skill in the art may see that various modifications, combinations, and changes may be constructed according to design conditions and factors within the scope of the accompanying claims or their equivalents.

The non-contact support structure according to an embodiment of the disclosure serves as a heat sink by being in non-contact with the metal additive manufactured product and may improve heat transfer efficiency from the metal additive manufactured product to the non-contact support structure. Accordingly, it is possible to quickly cool the metal additive manufactured product. In addition, the non-contact support structure may improve the mechanical characteristics of the first shape structure and reduce the amount of deformation of the first shape structure.

According to an embodiment of the disclosure, a support structure and a method of manufacturing a metal additive manufactured product may employ a non-contact support structure and a compact support structure to thereby reduce the amount of deformation of the first shape structure compared to a case where only one of the non-contact support structure or the contact support structure is used. Since the support structure and the method of manufacturing a metal additive manufactured product enable a less contact with the metal additive manufactured product than when only the contact support structure is used, the overall process time may be shortened by reducing the time it takes to remove the support structure after the metal additive manufacturing, and minimizing post-processing of the surface.

The effects of the inventive concept are not limited to the effects described above, and other effects not mentioned may be clearly understood by those skilled in the art from the present disclosure and the accompanying drawings.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the appended claims.

## Claims

1. A non-contact support structure (100, 100A, 100B) for supporting a metal additive manufactured product (P) comprising a first shape structure (P1) that has an overhang structure,
the non-contact support structure (100, 100A, 100B) comprising:
an opposite surface (110, 110A, 110B) configured to face a surface (S) of the first shape structure (P1);
a bottom surface (120, 120A, 120B) configured to contact a base (B) on which the metal additive manufactured product (P) is provided; and
an intermediate surface (130, 130A, 130B) perpendicular to both the opposite surface (110, 110A, 110B) and the bottom surface (120, 120A, 120B) and comprising at least one opening (140, 140A, 140B).

2. The non-contact support structure (100, 100A, 100B) of claim 1, wherein a cross-section perpendicular to the base (B) of the first shape structure (P1) comprises an equilateral trapezoid that has a bottom side (U) shorter than a top side (T).

3. The non-contact support structure (100, 100A, 100B) of claim 2, wherein the first shape structure (P1) comprises: a plurality of first surfaces (S1) in a same direction as a hypotenuse of the equilateral trapezoid; and
at least one second surface (S2) perpendicular to the hypotenuse of the equilateral trapezoid.

4. The non-contact support structure (100, 100A, 100B) of claim 3, wherein the opposite surface (110, 110A, 110B) is configured to be spaced apart from and be parallel to a first surface (S1) among the plurality of first surfaces (S1).

5. The non-contact support structure (100, 100A, 100B) of claim 4, wherein the opposite surface (110, 110A, 110B) is configured to be spaced apart from the first surface (S1) by a gap that is 8 to 10 times a stacking height (AM) of one layer (D) of the first shape structure (P1).

6. The non-contact support structure (100, 100A, 100B) of any one of the preceding claims, wherein a ratio of an average thickness (q) of the non-contact support structure (100, 100A, 100B) to a length (k) of the opposite surface (110, 110A, 110B) is in a range of 1:7 to 1:10.

7. The non-contact support structure (100, 100A, 100B) of any one of the preceding claims, wherein a longitudinal direction (L) of the at least one opening (140, 140A, 140B) forms an angle with the base (B) that is 45° or more.

8. The non-contact support structure (100, 100A, 100B) of any one of the preceding claims, further comprising:
an inner pillar (150, 150A, 150B) connecting the opposite surface (110, 110A, 110B) to the bottom surface (120, 120A, 120B) and the first shape structure (P1); and
an outer pillar (160, 160A, 160B) connecting the opposite surface (110, 110A, 110B) to the bottom surface (120, 120A, 120B) and configured to face a direction that is opposite of the first shape structure (P1).

9. The non-contact support structure (100, 100A, 100B) of claim 8, wherein the outer pillar (160, 160A, 160B) comprises:
a first outer pillar (161, 161A) perpendicular to the bottom surface (120, 120A, 120B);
a second outer pillar (163, 163A) connected to a top end of the first outer pillar (161, 161A) and inclined toward the inner pillar (150, 150A, 150B); and
a third outer pillar (165, 165A) connected from a top end of the second outer pillar (163, 163A) to an outer top end of the opposite surface (110, 110A, 110B) and inclined toward a direction that is opposite of the inner pillar (150, 150A, 150B).

10. A support structure (1) for supporting a metal additive manufactured product (P), the support structure (1) comprising:
a non-contact support structure (100, 100A, 100B) according to any one of the preceding claims; and
a contact support structure (200) configured to contact and support the metal additive manufactured product (P).

11. The support structure (1) of claim 10, wherein the metal additive manufactured product (P) comprises the first shape structure (P1) that has the overhang structure, and
wherein the contact support structure (200) is configured to contact the first shape structure (P1).

12. The support structure (1) of claim 11, wherein a cross-section perpendicular to a base (B) of the first shape structure (P1) comprises an equilateral trapezoid that has a bottom side (U) shorter than a top side (T).

13. The support structure (1) of claim 12, wherein the first shape structure (P1) comprises:
a plurality of first surfaces (S1) in the same direction as a hypotenuse of the equilateral trapezoid; and
at least one second surface (S2) perpendicular to the hypotenuse of the equilateral trapezoid.

14. The support structure (1) of claim 13, wherein the non-contact support structure (100, 100A, 100B) is configured to face a first surface (S1) among the plurality of first surfaces (S1), and
wherein the contact support structure (200) is configured to contact a second surface (S2) among the at least one second surface (S2).

15. The support structure (1) of any one of claims 11 to 14, further comprising a plurality of the non-contact support structures (100, 100A, 100B) and a plurality of the contact support structures (200),
wherein the plurality of non-contact support structures (100, 100A, 100B) and the plurality of contact support structures (200) are alternately spaced apart from each other in a circumferential direction (F).
